## Europäisches Patentamt
## European Patent Office
## Office européen des brevets

(11) Veröffentlichungsnummer: **0 255 120**
**B1**

# EUROPÄISCHE PATENTSCHRIFT

(45) Veröffentlichungstag der Patentschrift:
**18.10.89**

(21) Anmeldenummer: **87110974.0**

(22) Anmeldetag: **29.07.87**

(51) Int. Cl.⁴: **B28D 7/00**

(54) Gerät zum Herstellen von Wandausnehmungen.

(30) Priorität: **01.08.86 DE 3626063**
**29.11.86 DE 3640870**

(43) Veröffentlichungstag der Anmeldung:
**03.02.88 Patentblatt 88/5**

(45) Bekanntmachung des Hinweises auf die Patenterteilung:
**18.10.89 Patentblatt 89/42**

(84) Benannte Vertragsstaaten:
**BE ES FR GB IT NL SE**

(56) Entgegenhaltungen:
**EP-A- 0 142 640**
**DE-A- 2 542 679**
**DE-A- 2 626 945**
**DE-A- 2 826 413**
**DE-A- 2 913 501**

(73) Patentinhaber: **Kaiser GmbH & Co. KG, Jahnstrasse 8,
D-5885 Schalksmühle/Westfalen(DE)**

(72) Erfinder: **Löbel, Helmut, Am Rauhen Stück 11,
D-5885 Schalksmühle(DE)**
Erfinder: **Purschke, Norbert, Viktoriastrasse 80,
D-5885 Schalksmühle 1(DE)**

(74) Vertreter: **Buse, Karl Georg, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt. wenn die Einspruchsgebühr entrichtet worden ist (Art. 99(1) Europäisches Patentübereinkommen).

**Beschreibung**

Die Erfindung bezieht sich auf ein Gerät zum Herstellen von Wandausnehmungen für die nachträgliche Montage von Hohlwanddosen einer Elektroinstallation, mit einem im Querschnitt runden Grundkörper, an dem das eine Ende eines Sägeblattes vorzugsweise lösbar angebracht ist, dessen vordere freie Stirnfläche die Verzahnung aufweist und bei dem in der Mitte des Grundkörpers ein Bohrer lösbar befestigt ist, der im zusamengebauten Zustand mit seiner Spitze über das Sägeblatt vorsteht und dessen rückwärtiges Ende mit einer Antriebsvorrichtung, wie einer Bohrmaschine zusammenwirkt.

Derartige Geräte sind in mannigfachen Ausführungsformen bekannt. Sie dienen dazu, in Wänden aller Art, beispielsweise in Hohlwänden, Ausnehmungen zu erzeugen, um dann in eine solche Ausnehmung eine Hohlwanddose einzusetzen. Die Hohlwanddose weist dabei in aller Regel einen auch außen abgewinkelten Abschlußrand auf, der verhindert, daß sie durch die Ausnehmung hindurchgeschoben werden kann.

Derartige Geräte haben sich in der Praxis bewährt, vor allem, wenn die Querschnittsgestalt des Sägeblattes sich aus abgeflachten und runden Abschnitten zusammensetzt. Dadurch wird beim bestimmungsgemäßen Gebraucht des Gerätes ein einwandfreier Freischnitt erzielt. Ein Klemmen des Sägeblattes in der Wand oder ein Festhängen des Butzens im Sägeblatt ist weitgehend beseitigt.

Soweit diese Geräte zum Herstellen von Wandausnehmungen für die nachträgliche Montage von Einzelhohlwanddosen einer Elektroinstallation eingesetzt werden, arbeiten sie problemlos. Schwierigkeiten gibt es dagegen in der Praxis, wenn mehrere Ausnehmungen neben- oder übereinanderliegende angeordnet werden sollen, um so Installationsgeräte-Kombinationen, seien es nun Zweier-, Dreieroder Viererkombinationen, aufzunehmen. Die Herstellung des ersten Ausnehmung einer solchen Ausnehmungsgruppe gestaltet sich problemlos. Hier liegt der Punkt, an dem das Geräte mit der Spitze seines Bohrers angestzt werden muß, genau fest und die Ausnehmung läßt sich in der gewünschten Weise erzeugen. Schwierigkeiten bereitet es dann aber, die zweite Ausnehmung herzustellen, weil diese eine exakte Lage im Bezug auf die erste Ausnehmung einnehmen muß, weil sonst die Installationsgeräte-Kombination nicht in die beiden erzeugten Ausnehmungen paßt. Es ist vielfach ein Nacharbeiten der hergestellten Ausnehmungen erforderlich. Dies ist mit einem erhöhten Arbeitsaufwand durchzuführen, wodurch sich die Kosten für die Herstellung der Ausnehmungen wesentlich erhöhen. Es werden in der Praxis zwar Schablonen eingesetzt, durch die beispielsweise die Mittelpunkte der Ausnehmungen, die einen genau festgelegten gegenseitigen Abstand voneinander haben müssen, gekennzeichnet werden, jedoch bringen derartige Schablonen nicht die gewünschte Wirkung. Vielmehr passiert es trotz Anwendung solcher Schablonen in der Praxis häufig, daß die beiden Ausnehmungen nicht ihre genaue gegenseitige Lage einnehmen. Beispielsweise ist dies geschehen, weil bei der Herstellung der zweiten Ausnehmung der Mittelpunkt, der mittels einer Schablone gekennzeichnet ist, durch die Bohrerspitze nicht genau getroffen wird.

Hier will die Erfindung Abhilfe schaffen. Sie will eine Möglichkeit aufzeigen, durch die mehrere Ausnehmungen in einer Wand für die nachträgliche Montrage von Hohlwanddosen hergestellt werden können, ohne daß ein Nachbearbeiten erforderlich ist. Vielmehr sollen die Ausnehmungen in der Wand einen solchen gegenseitigen Abstand und eine solche gegenseitige Lage haben, daß in der Praxis gebräuchliche Elektroinstallations-Kombinationen ohne weiteres in sie eingesetzt werden können.

Dieses Ziel ist erreicht durch eine mit der Antriebsvorrichtung kuppelbare Hilfsvorrichtung, bestehend aus einem an die Wand anlegbaren Abstützrahmen mit einem Durchbruch zum Durchgriff der Arbeitswerkzeuge des Gerätes und mit einem Haltekörper, wobei Abstützrahmen und Haltekörper über Verbindungselemente und Kraftspeicher derart miteinander verbunden sind, daß ihr gegenseitiger Abstand veränderbar ist und aus einem dem Abstützrahmen zugeordneten Führungs- und Zentrierkörper, der in eine bereits erzeugte Wandausnehmung einführbar ist, und dessen Mittelpunkt von demjenigen des Arbeitswerkzeuges einen Abstand aufweist, der dem genormten Abstand der Mittelpunkte von Installationsgeräten einer Installationsgeräte- Kombination entspricht.

Von Vorteil ist zunächst, daß eine solche Hilfsvorrichtung mit auf dem Markt befindlichen Antriebsvorrichtungen, wie Bohrmaschinen, ohne weiteres gekuppelt werden kann. Bei der Ausbildung der erfindungsgemäßen Hilfsvorrichtung ist von der Erkenntnis ausgegangen, daß - gleichgültig, wie viele Ausnehmungen zur Unterbringung einer Installationsgeräte-Kombination hergestellt werden müssen - die Erzeugung der ersten Ausnhemung problemlos ist; ferner von der weiteren Erkenntnis, daß man diese erste Ausnehmung heranzieht, um eine weitere Ausnehmung in der gleichen Größe in einem genau festgelegten Abstand von der bereits erzeugten zweiten herzustellen. Zur Lagefixierung der zweiten herzustellenden Ausnehmung wird somit mehr - wie bisher - auf eine Schablone zurückgegriffen sondern auf die bereits hergestellte Ausnehmung selbst. Zu diesem Zweck hat die Hilfsvorrichtung ein Führungs- und Zentrierwerkzeug, welches genau in die erste, bereits hergestellte Ausnehmung paßt. Der Mittelpunkt dieses Führungs- und Zentrierkörpers hat dabei einen genau festgelegten Abstand von dem Mittelpunkt des Arbeitswerkzeuges des Gerätes. Dies bedeutet, daß beim bestimmungsgemäßen Gebraucht der Hilfsvorrichtung der Führungs- und Zentrierkörper in die bereits hergestellte Ausnehmung in der Wand eingesetzt wird. Ist dies geschehen, dann ist auch der Mittelpunkt der zweiten herzustellenden Ausnehmung festgelegt. Beim Arbeiten mit der erfindungsgemäßen Hilfsvorrichtung wird der Abstützrahmen an die Wand angelegt, in der die Ausnehmungen zur Unterbringung einer Installationsgeräte-Kombination hergestellt werden sollen. Der Abstützrahmen hat daher auf seiner der Wand zugekehrten Seite eine ebene Fläche, in der sich ein mittig angeordneter großer Durchbruch befindet, der beim Erzeugen von Ausnehmungen von dem eigentlichen Arbeitswerkzeug des Gerätes mit Spiel durchgriffen werden kann. Der mit dem Abstützrahmen zusammenwirkende Haltekörper hat die Aufgabe, die Verbindung mit einer Antriebsvorrichtung, wie einer Bohrmaschine, herzustellen, wobei jedoch nicht die motorischen Einrichtungen der Bohrmaschine benutzt werden sondern lediglich Teile des Gehäuses, welche als Gegenkupplungen wirken. Die Veränderbarkeit des Abstandes zwischen dem Abstützrahmen und dem Haltekörper ist erforderlich, um eine Anpassung an einen möglichen unterschiedlich langen Weg des Arbeitswerkzeuges zu erzielen. Dabei werden die Kraftspeicher, die den Verbindungselementen zwischen Abstützrahmen und Haltekörper zugeordnet sind, dazu benutzt, um nach Aufhören der Arbeiten den ursprünglichen gegenseitigen Abstand zwischen den beiden Teilen wieder herzustellen.

Bei der bevorzugten Ausführungsform der Erfindung ist der Führungs- und Zentrierkörper im Bezug auf die Grundebene des Abstützrahmens begrenzt verschiebbar. Dabei ist vorgesehen, daß der Führungs- und Zentrierkörper in der unwirksamen Lage der Hilfsvorrichtung unter Einwirkung einer Feder um das Maß seiner Verschiebebewegung vor der Grundebene des Abstützrahmens liegt. Bei einer solchen Ausbildung der Hilfsvorrichtung kann man auch die erste Ausnehmung für eine Installationsgeräte-Kombination in der Wand mit dem Gerät herstellen, obwohl die Hilfsvorrichtung bereits an dem Gehäuse der Antriebsvorrichtung angebracht ist. Beim Anlegen des Abstützrahmens an die Wand kommt nämlich auch die Vorderseite des Führungs- und Zentrierkörpers mit der Wand in Berührung und zwar eher als der Abstützrahmen. Wegen der verschiebbaren Lagerung des Führungs- und Zentrierkörpers wird daher dieser so weit aus seiner vorstehenden Lage züruckgeschoben, bis seine Vorderfläche mit derjenigen des Abstützrahmens fluchtet. Erst bei der Herstellung der zweiten Ausnehmung übernimmt dann der Führungs- und Zentrierkörper seine eigentliche Funktion, indem er nämlich voreilend in die bereits hergestellte Ausnehmung eintaucht, so daß dann die zweite Ausnehmung exakt in dem gewünschten Abstand von der ersten hergestellt werden kann.

Es empfiehlt sich, den Abstützrahmen einen seitlich vorstehenden Teil aufweisen zu lassen, der einen Verbinder mit der Rückstellfeder aufnimmt, dessen vorderes Ende in dem Führungs- und Zentrierkörper lagert. Die Rückstellfeder umgreift dabei zweckmäßig den Schaft des Verbinders und sorgt dafür, daß der Führungs- und Zentrierkörper im Abstand von der Vorderfläche der Verbindungsteiles mit dem Abstützrahmen gehalten wird. Der Verbinder ist mit an sich bekannten Mitteln ausgestattet, die ein Abfallen des Führungs- und Zentrierkörpers verhindern.

Nach einem weiteren Vorschlag der Erfindung sind ein und demselben Abstützrahmen mehrere, unterschiedlich bemessene und wahlweise benutzbare Führungs- und Zentrierkörpers zugeordnet. Durch diese unterschiedlich gestalteten und bemessenen Führungs- und Zentrierkörper kann man durch Auswechseln der Führungs- und Zentrierkörper einen anderen Abstand zwischen dem Mittelpunkt des Geräte-Arbeitswerkzeuges und dem Mittelpunkt des Führungs- und Zentrierkörpers herstellen. Um das Einführen des Führungs- und Zentrierkörpers in eine bereits herge stellte Ausnehmung zu erleichtern, ist dieser im Bereich seiner vorderen Mantelflächer mit einer Einführungsschräge versehen.

Es empfiehlt sich, daß der Abstützrahmen mit dem Haltekörper über mehrere, vorzugsweise drei Verbindungsstangen verbunden ist, von denen jede von einer Rückstellfeder umgeben ist, wobei die Verbindungsstangen und die Rückstellfedern vorzugsweise untereinander gleichgestaltet sind. Dabei werden die Verbindungsstangen bevorzugt aus einem metallischen Werkstoff hergestellt, während für die Fertigung des Abstützrahmens und des Haltekörpers der Hilfsvorrichtung bevorzugt Kunststoffe mit grundsätzlich bekannten Eigenschaften eingesetzt werden. Dadurch, daß die Rückstellfedern und die Verbindungsstangen bevorzugt gleichgestaltet werden, wird die Fertigung und die Montage sehr vereinfacht.

Bei der bevorzugten Ausführungsform der Erfindung hat der Haltekörper in seiner Mitte liegend eine Kupplung, die auf die genormte Befestigungsaufnahme einer Antriebsvorrichtung, wie einer Bohrmaschine, aufsteckbar ist.

Dabei ist die Kupplung zweckmäßig hohlzylinderförmig gestaltet und einstückig mit dem Haltekörper ausgebildet. Da die Befestigungsaufnahmen von Bohrmaschinen und dergl. genormt sind, ist es ohne weiteres möglich, die Kupplung der Hilfsvorrichtung diesen Abmessungen anzupassen, so daß ein leichtes Zusammenkuppeln und bei Bedarf auch ein leichtes Wiederlösen der Hilfsvorrichtung von der Antriebsvorrichtung möglich ist.

Dabei wird bevorzugt der Haltekörper in Draufsicht gesehen sternförmig gestaltet, wobei die Kupplung im Mittelpunkt eines solchen Sternes liegt, während das Ende jedes Sternarmes über Haltemittel jeweils das eine Ende einer der Verbindungsstangen aufnimmt. Die Haltemittel, die dabei eingesetzt werden, können bekannt sein. Dies gilt ebenso für die Art der Verbindung zwischen den beiden genannten Teilen.

Der Abstützrahmen weist zweckmäßig auf seiner dem Haltekörper zugekehrten Seite eine der Anzahl der Verbindungsstangen angepaßte Anzahl von hohlzylinderartigen Verlängerungen auf, in welche jeweils das eine Ende einer Verbindungsstange eingreift und an dessen Boden sich jeweils das eine Ende der Rückstellfeder abstützt.

Die Hilfsvorrichtung bildet einen zusammenhängenden Körper, der als Ganzes mit einer Bohrmaschine verbunden und wieder abgenommen werden kann.

Diese Hilfsvorrichtung nach dem ersten Ausführungsbeispiel ist hinsichtlich ihrer Herstellung noch verhältnismäßig aufwendig, nicht zuletzt deshalb, weil bei ihr ein an die Wand anlegbarer Abstützrahmen mit einem Durchbruch zum Durchgriff der Arbeitswerkzeuge des Gerätes erforderlich ist und wobei mehrere, in der Regel drei, Verbindungselemente und Kraftspeicher zwischen dem Abstützrahmen und dem Haltekörper vorhanden sein müssen. Nachfolgend wird nun ein Ausführungsbeispiel beschrieben, bei dem die Anzahl der Einzelteile der Hilfsvorrichtung des Gerätes reduziert ist. Bei dieser Ausführungsform der Erfindung weist der langgestreckte Haltekörper an seinem einen Ende eine auf der genormten Befestigungsaufnahme der Antriebsvorrichtung befestigbare Kupplung und an seinem anderen Ende eine Aufnahmebuchse für das rückwärtige Ende einer Verbindungsstange für den Führungs- und Zentrierkörper auf. Gegenüber dem zuerst genannten Gerät kommt somit bei dieser Hilfsvorrichtung der Abstützrahmen mit einem Durchbruch zum Durchgriff der Arbeitswerkzeuge ganz in Fortfall. Anstelle der bisher benutzten drei Verbindungselemente und der drei Kraftspeicher zwischen dem Abstützrahmen und dem Haltekörper tritt nur noch ein einziges Verbindungselement und ein einziger Kraftspeicher, wobei diese beiden Teile unmittelbar mit dem Führungs- und Zentrierkörper zusammenwirken. Auf diese Weise wird gegenüber der ersten Ausführungsform der Erfindung eine wesentliche Vereinfachung der Hilfsvorrichtung erreicht, was sich nicht nur auf die Herstellung und Montage sondern auch auf die Kosten günstig auswirkt. Trotzdem sind sämtliche angeführten Vorteile der ersten Ausführungsform der Hilfsvorrichtung auch bei diesem Gerät vorhanden.

Zweckmäßig besteht die Kupplung des Haltekörpers aus einem Klemmelement mit einem Aufnahmeraum und aus einem Befestigungselement.

Dabei empfiehlt es sich, die Begrenzungswand des Aufnahmeraumes durch einen Schlitz zu unterbrechen und den Schlitz von einer Schraube durchsetzen zu lassen, auf dessen aus dem Haltekörper herausragenden Ende eine Spannmutter angebracht ist. Auf diese Weise kann mittels der Spannmutter ein Festlegen des Haltekörpers auf der genormten Befestigungsaufnahme einer Antriebsvorrichtung, beispielsweise einer Bohrmaschine, erfolgen.

Nach einem anderen Vorschlag ist in dem Verbindungsbereich des Haltekörpers eine Befestigungsfläche zum lösbaren Anbringen eines Zusatzhandgriffes angeordnet. Dabei werden solche Zusatzhandgriffe verwendet, die im Handel als Zubehörteile für Antriebsvorrichtungen, wie Bohrmaschinen, erhältlich sind. Die Befestigungsfläche ist dabei im Querschnitt kreisrund gehalten, so daß die den handelsüblichen Zusatzhandgriffen zugeordneten Befestigungselemente ohne weiteres dazu benutzt werden können, den Zusatzhandgriff mit dem Haltekörper lösbar zu verbinden.

Es empfiehlt sich, den Führungs- und Zentrierkörper eine Nabe aufweisen zu lassen, die unter Zwischenschaltung einer Verrastung in unterschiedlichen Lagen mit dem Aufsteckstück der Verbindungsstange verbindbar sind.

Dabei empfiehlt es sich, den Führungs- und Zentrierkörper mittels einer Verbindungsschraube mit der Verbindungsstange zu verbinden, wobei die Verbindungsschraube außerhalb des Mittelpunktes des etwa kreisförmige Gestalt aufweisenden Führungs- und Zentrierkörpers angeordnet ist. Dabei kann der Führungs- und Zentrierkörper in bezug auf das Arbeitswerkzeug zwei unterschiedlich bemessene Lagen einnehmen, die aber beiden den genormten Abständen der Mittelpunkte von Installationsgeräten einer Installationsgerätekombination entsprechen. Daher kann der Benutzer des erfindungsgemäßen Gerätes wahlweise einen längeren oder kürzeren Abstand zwischen der Befestigungsschraube des Führungs- und Zentrierkörpers einerseits und dem Mittelpunkt des Arbeitswerkzeuges andererseits einstellen.

Aus fertigungstechnischen Gründen empfiehlt es sich, den Haltekörper einstückig auszubilden. Dabei kann einer der in der Elektroindustrie gebräuchlichen Isolierstoffe Verwendung finden.

Auf der Zeichnung ist die Erfindung in mehreren Ausführungsbeispielen dargestellt und zwar zeigen:

Fig. 1 in schaubildlicher Darstellung die erfindungsgemäße Hilfsvorrichtung in ihrer Arbeitslage nach dem Zusammenkuppeln mit einer Antriebsvorrichtung, wie einer Bohrmaschine,

Fig. 2 eine Seitenansicht der erfindungsgemäßen Hilfsvorrichtung,

Fig. 3 eine Vorderansicht der Hilfsvorrichtung gemäß der Fig. 2,

Fig. 4 einen Schnitt durch die Hilfsvorrichtung gemäß der Fig. 2 der Zeichnung entlang der Linie IV-IV im vergrößerten Maßstab,

Fig. 5 eine Rückansicht der erfindungsgemäßen Hilfsvorrichtung gemäß der Fig. 2 ,

Fig. 6 eine Draufsicht auf eine teilweise weggebrochene Wand, in der zwei Wandausnehmungen mit dem erfindungsgemäßen Gerät zum Herstellen von Wandausnehmungen erzeugt sind,

Fig. 7 eine Draufsicht auf eine Wand ähnlich derjenigen nach Fig. 6, wobei jedoch die zwei separaten Ausnehmungen zu einer einzigen durchlaufenden, etwa ovalen Ausnehmung umgestaltet sind,

Fig. 8 ebenfalls in Draufsicht eine Wand, teilweise weggeschnitten, wobei in Neben- und Übereinanderanordnung vier Ausnehmungen zur Aufnahme von Installationsgeräte-Kombinationen vorhanden sind,

Fig. 9 ebenfalls in Draufsicht und teilweise weggebrochen eine Wand, bei der wiederum vier Ausnehmungen erzeugt sind, die jetzt in einer Reihe nebeneinanderliegend angeordnet sind,

Fig. 10 ein mit der erfindungsgemäßen Hilfsvorrichtung zusammenwirkendes Gerät zum Herstellen von Wandausnehmungen in Seitenansicht, teilweise weggeschnitten,

Fig. 11 im verkleinerten Maßstab und in explosionsartiger Darstellung die Einzelteile des Gerätes nach der Fig. 10,

Fig. 12 in schaubildlicher Darstellung, teilweise weggebrochen, eine zweite Ausführungsform eines Gerätes zum Herstellen von Wandausnehmungen,

Fig. 13 eine Draufsicht auf das Gerät gemäß der Fig. 12 der Zeichnung, jedoch ergänzt durch eine innerhalb des Umfangsraumes des Hohlzylinderskörpers liegende Kegelfeder,

Fig. 14 in schaubildlicher Darstellung eine zweite Ausführungsform der erfindungsgemäßen Hilfsvorrichtung in ihrer Arbeitslage nach dem Zusammenkuppeln mit einer Antriebsvorrichtung, wie einer Bohrmaschine,

Fig. 15 eine Seitenansicht der erfindungsgemäßen Hilfsvorrichtung nach Fig. 14,

Fig. 16 eine Vorderansicht der Hilfsvorrichtung gemäß der Fig. 15,

Fig. 17 einen Schnitt durch die Hilfsvorrichtung gemäß der Fig. 16 der Zeichnung entlang der Linie XVII-XVII, jedoch im vergrößerten Maßstab,

Fig. 18 in Seitenansicht den Führungs- und Zentrierkörper der zweiten Ausführungsform der erfindungsgemäßen Hilfsvorrichtung, teilweise weggebrochen und

Fig. 19 eine Ansicht - teilweise im Schnitt - des Haltekörpers der zweiten Ausführungsform der erfindungsgemäßen Hilfsvorrichtung.

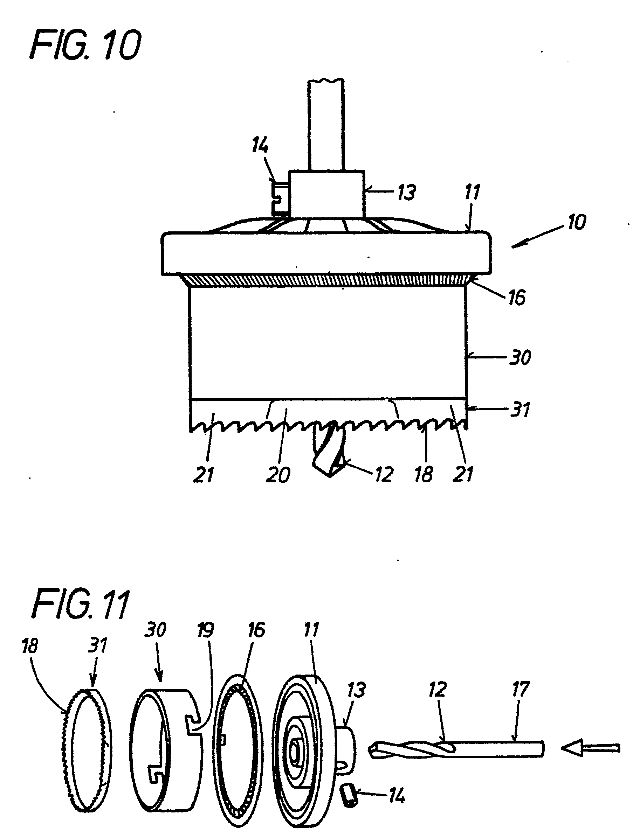

Das Gerät zum Herstellen von Wandausnehmungen für die nachträgliche Montage von Hohlwanddosen einer Elektroinstallation ist im ersten Ausführungsbeispiel generell mit 10 bezeichnet. Mit einem solchen Gerät können beispielsweise Ausnehmungen in Hohlwänden hergestellt werden, in welche an sich bekannte Hohlwanddosen eingesetzt werden sollen. Die Vorrichtung 10 weist einen Grundkörper 11 auf, von dem in den Fig. 10 bis 13 zwei Ausführungsformen dargestellt sind. Er ist im Querschnitt kreisförmig gestaltet und hat an seinem rückwärtigen Ende eine Nabe 13, die von einer nicht näher bezeichneten Bohrung durchsetzt ist, durch welche ein Spiralbohrer 12 hindurchgreift. Das rückwärtige Ende des Spiralbohrers 12 wirkt in bekannter Weise mit dem Bohrfutter 35 einer Antriebsvorrichtung 32, wie einer Bohrmaschine bekannter Bauart, zusammen.

Zu dem Gerät zum Herstellen von Wandausnehmungen 10 gehört ferner ein generell mit 31 bezeichnetes Sägeblatt, das im Bereich der Stirnfläche eines Hohlzylinderkörper 30 mit an sich bekannten Mitteln verbunden ist. Der Hohlzylinderkörper 30 ist im Ausführungsbeispiel gemäß den Fig. 10 und 11 der Zeichnung mit einem Winkelschlitz 19 versehen, so daß eine lösbare Verbindung des Hohlzylinderkörpers 30 mit dem Grundkörper 11 hergestellt werden kann. Dies geschieht im Ausführungsbeispiel unter Zwischenschaltung eines ringartigen Randversenkers 16, durch den in bekannter Weise in der Begrenzungswand der herzustellenden Ausnehmung eine umlaufende Vertiefung erzeugt wird, in welche der nach außen abgewinkelte Flansch einer Hohlwanddose Platz findet.

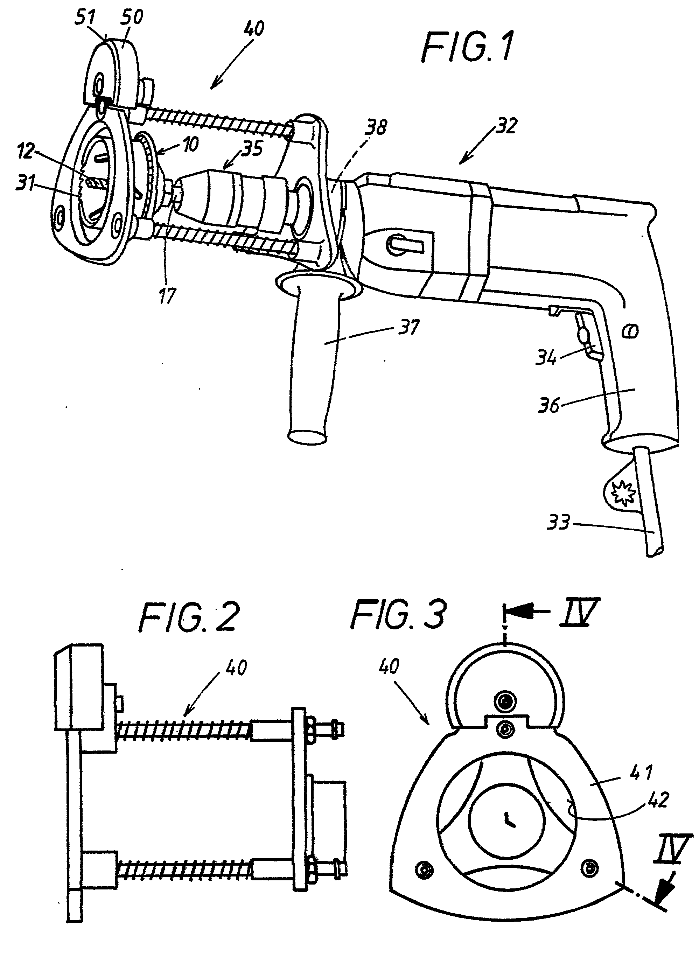

Wie die Fig. 10 und 11 dar Zeichnung erkennen lassen, ist der Spiralbohrer 12 mittels einer Schraube 14, beispielsweise einer Madenschraube, lösbar an dem Grundkörper 11 und zwar an dessen Nabe 13 befestigt. Der Spiralbohrer 12 hat die Aufgabe, beim Ausschneiden des Wandteiles das Sägeblatt 31 zu zentrieren. Das rückwärtige Ende 17 des Spiralbohrers 12 wird in bekannter Weise in das Bohrfutter 35 der Antriebsvorrichtung 32 eingespannt. Eine solche Antriebsvorrichtung treibt somit das Gerät zum Herstellen von Wandausnehmungen an. Diese Antriebsmaschinen sind in mannigfachen Ausführungsformen bekannte. In der Fig. 1 der Zeichnung ist eine dieser Ausführungsformen wiedergegeben.

An der Außenfläche des rückwärtigen Endes 17 des Spiralbohrers 12 können Markierungen oder auch Einkerbungen vorgesehen sein, an denen man feststellen kann, wie weit der Spiralbohrer 12 in das Bohrfutter 35 der der Antriebsvorrichtung 32 eingespannt ist. Damit kann man das Maß des Vorstehens der Spitze des Spiralbohrers 12 über die Verzahnung bzw. Zähne 18 des Sägeblattes 31 festlegen. Dies bedeutet, daß die in der Fig. 10 dargestellte Lage des Spiralbohrers 12 nur eine von mehreren möglichen Lagen wiedergibt.

Der Randversenker 16 kann in an sich bekannter Weise lösbar mit dem Grundkörper 11 der Vorrichtung 10 verbunden werden. Beispielsweise hat der Grundkörper 11 eine nach vorn offene, umlaufende Nut. An den Innenwandungen dieser Nut können diametral gegenüberliegende Vorsprünge vorgesehen sein, wobei jeder dieser Vorsprünge in einen Winkelschlitz 19 des Hohlzylinderkörpers 30 eingreift. Auf diese Weise eine bajonett-verschlußartige Verbindung des Hohlzylinderkörper 30 am Grundkörper 11 erzielt. Der Randversenker 16 kann eine Ausnehmung aufweisen, die in einen am Boden der Nut des Grundkörpers 11 befindlichen Vorsprung eingreift, so daß der Randversenker 16 gegen Drehung gesichert in der Nut des Grundkörpers 11 festgelegt ist. Die Stirnseite des Randversenkers 16 ist in bekannter Weise mit einer nicht näher bezeichneten Verzahnung versehen. Diese kommt mit der Ausnehmung der Wand benachbarten Randteilen in Wirkverbindung und schafft dort eine Vertiefung, in welche der obere Abschlußflansch einer Hohlwanddose Platz findet. Damit ist ein versenktes Anbringen des Abschlußflansches der Hohlwanddose möglich.

Bei dem Sägeblatt 31 kann es sich um ein normales, handelsübliches Sägeband handeln. Es können Sägebänder 31 in unterschiedlicher Größe Verwendung finden. Dabei können auch unterschiedliche Verzahnungen und Qualitäten des Sägeblattes 31 vorgesehen sein. Ein und demselben Hohlzylinderkörper 30 können somit mehrere, unterschiedlich gestaltete Sägeblätter 31 zugeordnet werden, von denen der Benutzer eines verwendet, und zwar dasjenige, was den durchzuführenden Arbeiten am besten entspricht. Die Verbindung des Sägeblattes 31 mit dem Hohlzylinderkörper 30 kann mit bekannten Mitteln durchgeführt werden.

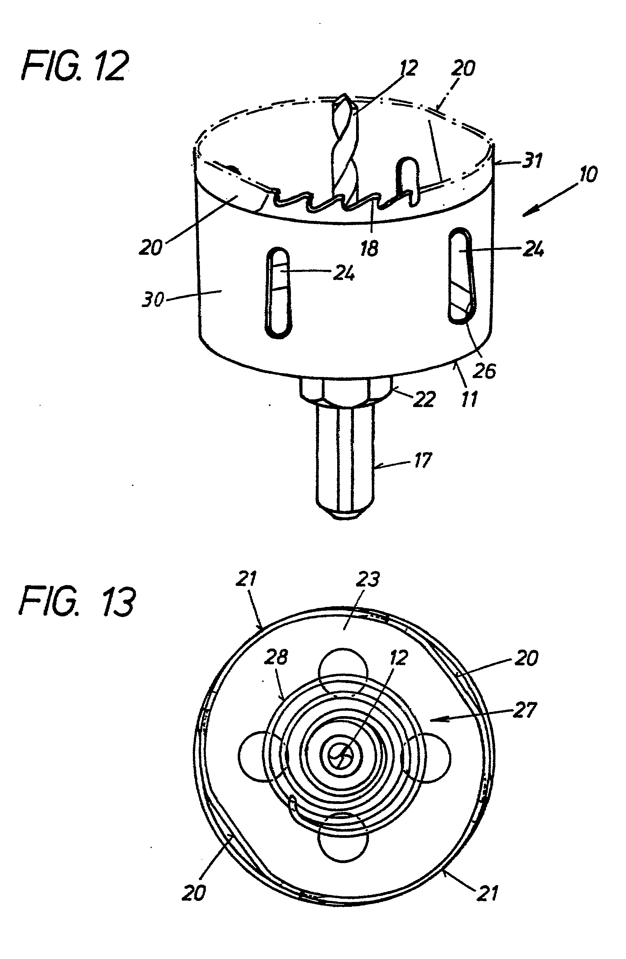

Bei der zweiten Ausführungsform des Gerätes zum Herstellen von Wandausnehmungen nach den Fig. 12 und 13 ist auf die Benutzung eines Randversenkers 16 verzichtet. Das Sägeblatt 31 hat bei beiden Ausführungsbeispielen zwei diametral gegenüberliegende unrunde - abgeflachte - Abschnitte 20, zwischen denen jeweils runde Abschnitte 21 liegen. In beiden Ausführungsbeispielen wechseln die abgeflachten Abschnitte 20 und die runden Abschnitte 21 des Sägeblattes 31 miteinander ab. Bei beiden dargestellten Ausführungsbeispielen hat das Sägeblatt 31 zwei runde Abschnitte 21, die insgesamt zwei Drittel seines Umfanges einnehmen, diametral gegenüberliegend angeordnet und untereinander gleichgestaltet sind.

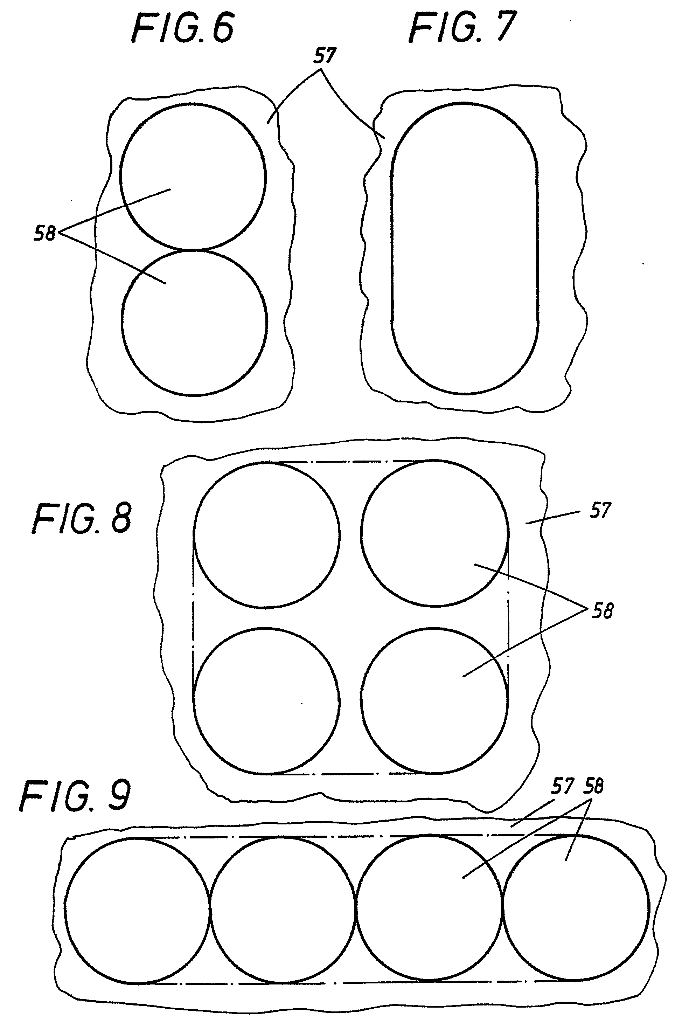

Wie die Fig. 13 der Zeichnung am besten erkennen läßt, liegen die runden Abschnitte 21 des Sägeblattes 31 im Bereich des die Zähne 18 aufweisenden freien Endes auf einem Kreisbogen. Der Durchmesser dieses Kreisbogens ist größer gehalten als der der herzustellenden Wandausnehmung, von denen in den Fig. 6 bis 9 mehrere dargestellt sind. Die Fig. 13 läßt ferner erkennen, daß der gegenseitige Abstand der flachen Abschnitte 20 des Sägeblattes 31 kleiner ist als der Durchmesser des Kreisbogens der runden Abschnitte 21 und damit auch kleiner als der Durchmesser der herzustellenden Wandausnehmung.

Die Fig. 12 der Zeichnung veranschaulicht, daß der Hohlzylinderkörper 30 an seiner Umfangsfläche mit mehreren, axial verlaufenden Schlitzen 24 versehen ist. Die Begrenzungswandungen der Schlitze 24 sind mit 26 bezeichnet. Im gewählten Ausführungsbeispiel sind vier untereinander gleichgestaltete Schlitze 24 vorhanden, die jeweils um 90° versetzt gleichmäßig über den Umfang des Hohlzylinderkörpers 30 verteilt angeordnet sind.

Bei der Ausführungsform nach den Fig. 12 und 13 der Zeichnung sind der Hohlzylinderkörper 30 und der Grundkörper 11 zu einer einstückigen Baueinheit zusammengefaßt. Dies bedeutet, daß bei dieser Ausführungsform ein einseitig geschlossener Zylinder vorhanden ist, den an seiner freien Stirnfläche das Sägeblatt 31 trägt und im Bereich seines Bodens Lagerstellen für den Spiralbohrer 12 und eine Kegelfeder 27 aufweist.

In der Fig. 13 ist in Abwandlung der Ausführungsform nach der Fig. 12 der Zeichnung konzentrisch zum Spiralbohrer 12 und diesen umgebend eine an der Innenwand des Grundkörpers 11 festgelegte Feder vorhanden. Der Grundkörper 11 entspricht bei dieser Ausführungsform dem Boden des Hohlzylinderkörpers 30. Die Feder ist als Kegelfeder 27 ausgebildet. Die einzelnen Windungen der Kegelfeder 27 sind gestaltet, daß ein vollständiges Ineinanderschachteln ihrer Windungen möglich ist. Dabei ist die vorderste - den größten Durchmesser aufweisende - Windung mit 28 bezeichnet. Die Kegelfeder 27 weist bei dieser Ausbildung im zusammengepreßten Zustand eine Höhe auf, die lediglich der Drahtstärke einer einzigen Federwirkung entspricht. Das Festlegen des einen Endes der Kegelfeder 27 am Grundkörper 11 bzw. am Boden des Hohlzylinderkörpers 13 kann in grundsätzlich bekannter Weise erfolgen.

Mittels der Antriebsvorrichtung 32 und des damit gekuppelten Gerätes 10 kann somit in bekannter Weise in einer Wandung eine Ausnehmung erzeugt werden. So lange es sich um die Herstellung von Ausnehmungen handelt, in denen lediglich einzelne Hohlwanddosen Platz finden, ergeben sich in der Praxis keine Schwierigkeiten. Dies ändert sich erst dann, wenn mehrere Ausnehmungen erzeugt werden müssen, in welche Hohlwanddosen eingesetzt werden, die der Aufnahme von Installationsgerätekombinationen dienen. Um hier alle Schwierigkeiten auszuräumen, die hinsichtlich der Anordnung und der Lage der zweiten Ausnehmung im Bezug auf die erste entstehen, sind Hilfsvorrichtungen geschaffen, von denen die erste mit 40 bezeichnet ist. Wie die Fig. 1 der Zeichnung veranschaulicht, wird diese mit der Antriebsvorrichtung 32 lösbar verbunden. Zu diesem Zweck hat die Hilfsvorrichtung 40 eine Kupplung 46, die auf die Befestigungsaufnahme 38 der Antriebsvorrichtung 32 aufbringbar ist. Da es sich bei der Befestigungsaufnahme 39 um ein genormtes Teil handelt, kann die Hilfsvorrichtung 40 somit auf unterschiedlich ausgebildete, im Handel befindliche Bohrmaschinen 32 aufgesetzt werden.

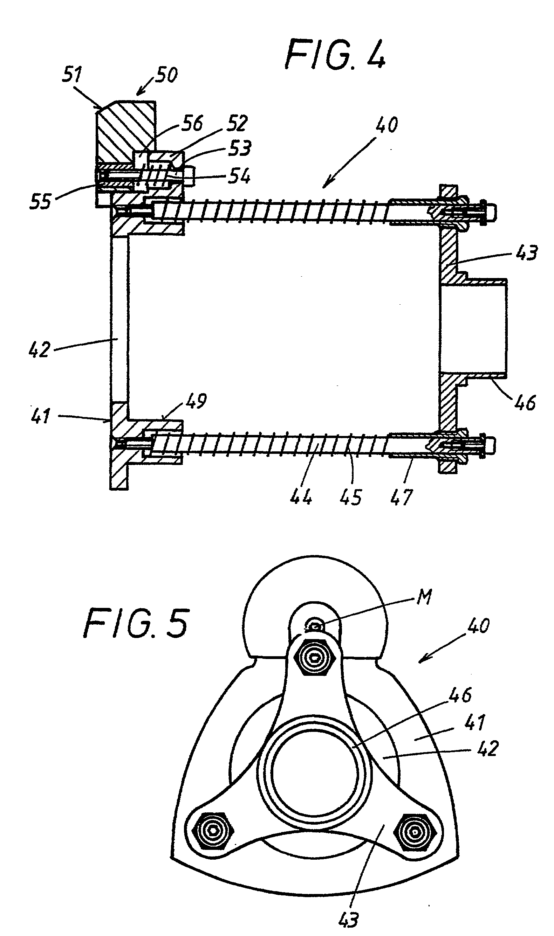

Wie die Fig. 1 und 4 der Zeichnung am besten erkennen lassen, hat die Hilfsvorrichtung 40 einen Abstützrahmen 41, der auf denjenigen Bereich einer Wand 57 angelegt wird, in dem eine Ausnehmung 58 für eine Hohlwanddose geschaffen werden soll. Der Abstützrahmen 41 hat die aus der Fig. 3 der Zeichnung ersichtliche Gestalt. Daraus ergibt sich, daß ein mittiger Durchbruch 42 vorhanden ist, dessen Durchmesser größer gehalten ist als der des Sägeblattes 31 des Gerätes 10 zum Herstellen der Wandausnehmung.

Wie die Fig. 4 veranschaulicht, hat der Abstützrahmen 41 einen seitlich vorstehenden Teil 52, der zweckmäßig mit ihm einstückig gehalten ist. Der Verbinder 52 dient der Lagerung eines Verbinders 53, dessen vorderes freie Ende mit einem generell mit 50 bezeichneten Zentrier- und Führungskörper zusammenwirkt. Im gewählten Ausführungsbeispiele greift das abgesetzte vordere Ende des Verbinders 53 in eine Einsatzbuchse 55 des Führungs- und Zentrierkörpers 50. Dabei können bekannte Verbindungsmittel eingesetzt werden. Der mittlere Teil des Schaftes des Verbinders 53 ist von einer Rückstellfeder 54 umgeben. Diese findet Platz in einem nicht näher bezeichneten Hohlraum des Teiles 52. Die Rückstellfeder 54 hält den Führungs- und Zentrierkörper 50 in seiner in der Fig. 5 dargestellten Lage, in welcher seine vordere freie Fläche über die Grundfläche des Abstützrahmens 41 vorsteht. Damit der Führungs- und Zentrierkörper bei der Herstellung der ersten Ausnehmung in der Wand nicht stört, wird er beim Anlegen des Abstützrahmens 41 an der Wand zurückgeschoben und zwar so weit, bis die beiden Vorderflächen von Abstützrahmen 41 und Führungs- und Zentrierkörper miteinander fluchten. Um diese Bewegung zu ermöglichen, ist zwischen den beiden Teilen 52 und 50 der Spalt 56 vorhanden.

Der Führungs- und Zentrierkörper übernimmt seine ihm zugedachte Funktion dann, wenn nach der ersten Ausnehmung in der Wand 57 - vergl. dazu die Fig. 6 der Zeichnung - eine zweite Ausnehmung 58 erzeugt werden soll. Die Hilfsvorrichtung 40 wird dabei so angesetzt, daß der Führungs-und Zentrierkörper in die erste hergestellte Ausnehmung 58 eingreift.

Dies kann in der Fig. 6 sowohl die obere als auch die untere Ausnehmung sein. Um dabei das Einführen des Zentrier- und Führungskörpers 50 in die Ausnehmung zu erleichtern, ist dieser mit einer Einführungsschräge 51 versehen. Die zweite Ausnehmung 58 gemäß der Fig. 6 wird somit hergestellt, indem der Führungs- und Zentrierkörper in die bereits hergestellte Ausnehmung eingesetzt wird. Auf diese Weise liegt der genaue Abstand der Mittelpunkte zwischen den beiden Ausnehmungen fest. An der Hilfsvorrichtung 40 können dabei Markierungen vorhanden sein, die die Waagerechte und die Lotrechte kennzeichnen.

Wie die Fig. 4 der Zeichnung am besten erkennen läßt, hat der Abstützrahmen 41 der Hilfsvorrichtung 40 auf seiner rückwärtigen Seite mehrere - im dargestellten Ausführungsbeispiel insgesamt drei - hohlzylinderartige Verlängerungen 49. In die nicht näher bezeichnete Bohrung der hohlzylinderartigen Verlängerung 49 greift jeweils das eine Ende einer Verbindungsstange 44 ein, deren anderes Ende über Haltemittel 48 mit einem Haltekörper 43 verbunden ist. Der größte Teil des Schaftes jeder Verbindungsstange 44 wird dabei von einer Rückstellfeder 45 umgriffen, deren eines Ende sich am Boden der Ausnehmung der hohlzylinderartigen Verlängerung 49 und deren anderes Ende sich an der Stirnfläche einer Buchse 47 des Haltekörpers 43 abstützt. In der in der Fig. 4 dargestellten Lagen haben der Abstutzrahmen 41 und der Haltekörper 43 ihren weitestmöglichen Abstand voneinander. Sie werden in dieser Lage durch die Rückstellfedern 45 auf den Verbindungsstangen 44 gehalten. Beim bestimmungsgemäßen Gebrauch der Hilfsvorrichtung wird ein gegenseitige Abstand zwischen dem Abstützrahmen 41 und dem Haltekörper 43 verringert. Das Maß des Verringerns hängt ab von dem Maß des Bewegens des Gerätes zum Herstellen der Ausnehmung 58 in der Wand 57. In allen Fällen erfolgt die gegenseitige Annäherung zwischen Abstützrahmen 41 und Haltekörper 43 unter Spannen der Rückstellfedern 45. Nach Aufhören der äußeren Kraft wird dann die Rückstellkraft der Federn 45 ausgenutzt, um die Teile 41 und 43 wieder in ihre in der Fig. 4 dargestellte Lage zurückzuführen.

Um ein einfaches Verbinden der Hilfsvorrichtung 40 mit der Antriebsvorrichtung 32 zu erzielen, hat der Haltekörper 43 eine Kupplung 46. Diese ist im gewählten Ausführungsbeispiel hohlzylinderförmig gestaltet und einstückig mit dem Haltekörper 43 ausgebildet. Wie aus der Fig. 5 der Zeichnung ersichtlich, hat der Haltekörper 43 im gewählten Ausführungsbeispiel in Draufsicht gesehen die Gestalt eines Sterns, wobei die Kupplung 46 im Mittelpunkt dieses Sternes liegt, während das Ende jedes Sternarmes über Haltemittel 48 jeweils das eine Ende der Verbindungsstange 44 aufnimmt. Die Haltemittel 48 können bekannte sein, so daß auf die detaillierte Angabe von Einzelheiten verzichtet wird.

In der Fig. 6 der Zeichnung sind in einer Wand 57 zwei untereinander gleichgestaltete Ausnehmungen 58 erzeugt und zwar mittels des in der Fig. 1 dargestellten Gerätes 10 mit der aufgesetzten Hilfsvorrichtung. Für die Herstellung der ersten Ausnehmung 58 in der Wand 57 ist es lediglich erforderlich, den Mittelpunkt festzulegen. Auf diesen wird dann die Spitze des Spiralbohrers 12 des Gerätes 10 aufgesetzt. Bei angebrachter Hilfsvorrichtung an der Antriebsvorrichtung wird bei Anlegen des Abstützrahmens 41 an die Wand 57 zunächst das für die Herstellung der ersten Ausnehmung nicht benötigte Führungs- und Zentrierelement 50 nach rückwärts geschoben, bis es mit seiner Vorderfläche mit der Grundfläche des Abstützrahmens fluchtet. Dananch kann in bekannter Weise die eine der beiden Ausnehmungen 58 gemäß der Fig. 6 der Zeichnung erzeugt werden. Diese erste Ausnehmung dient nun als Ausrichteinheit für die zweite herzustellende Ausnehmung, indem der Führungs- und Zentrierkörper 50 der Hilfsvorrichtung mit ihr zusammenarbeitet. Dies geschieht in der Weise, daß der Führungs- und Zentrierkörper, der ja - wie erwähnt - in seiner Normallage vor der Vorderfläche des Abstützrahmens 41 liegt, unter Benutzung seiner Einführschräge 51 in dei bereits hergestellte erste Ausnehmung eingeführt wird. Dabei können an der Hilfsvorrichtung vorgesehene Markierungen zum genauen Einhalten der Horizontalen bzw. Senkrechten dienen. Sobald der Führungs- und Zentrierkörper um ein bestimmtes Maß in die erste Ausnehmung eingetaucht ist, wird danach das Gerät 10 wirksam. Es erzeugt dann in der Wand 57 die zweite Ausnehmung 58. Die beiden Ausnehmungen haben dann eine solche Lage, das in ihnen ohne Schwierigkeiten ein elektrisches Installations-Kombi-Gerät eingesetzt werden kann.

In der Fig. 7 der Zeichnung ist aus den beiden Ausnehmungen 58 der Fig. 6 eine einzige längliche Ausnehmung geschaffen worden. Dies ist dadurch geschehen, daß einige Bereiche der Wand 57 entfernt sind.

In der Fig. 8 sind in ein und derselben Wand 57 insgesamt vier untereinander gleichgestaltete Ausnehmungen 58 erzeugt. Dabei ist im Vergleich mit der Fig. 6 der Zeichnung zu bemerken, daß der gegenseitige Abstand der Mittelpunkte der Ausnehmungen 58 vergrößert ist. Dies läßt sich beispielsweise dadurch erreichen, daß man an der Hilfsvorrichtung 40 einen anders bemessenen Führungs- und Zentrierkörper 50 anbringt.

Bei der Ausbildung gemäß der Fig. 9 der Zeichnung liegen die vier Ausnehmungen 58 nebeneinander. Hier ist aber wiederum davon ausgegangen, daß die Durchmesser der Ausnehmungen unmittelbar aneinander anschließen.

Bei der Benutzung der erfindungsgemäßen Hilfsvorrichtung ist es gleichgültig, welche der vier Ausnehmungen nach den Fig. 8 und 9 zuerst erzeugt wird. Die drei restlichen werden dann nacheinander gebildet, wobei dann jeweils eine bereits erzeugte Ausnehmung mit dem Führungs- und Zentrierkörper 50 zusammenwirkt.

Bei einer abgewandelten Ausführungsform ist die Hilfsvorrichtung mit 60 bezeichnet. Diese wird wiederum mit einer Antriebsvorrichtung 32 löabar verbunden.Zu diesem Zweck hat ein Haltekörper 61 der Hilfsvorrichtung 60 eine Kupplung, die auf die Befestigungsaufnahme 38 der Antriebsvorrichtung 32 aufbringbar ist. Da es sich bei der Befestigungsaufnahme 38 um ein genormtes Teil handelt, kann die Hilfsvorrichtung 60 somit auf unterschiedlich ausgebildete, im Handel befindliche Bohrmaschinen 32 aufgesetzt werden.

Die Hilfsvorrichtung 60 hat einen langgestreckten Haltekörper 61, der an seinem einen Ende die auf die genormte Befestigungsaufnahme befestigbare Kupplung 62, 63, 64, 65 und an seinem anderen Ende eine Aufnahmebuchse 67 für das rückwärtige Ende 79 einer Verbindungsstange 68 für einen Führungs- und Zentrierkörper 72 aufweist.

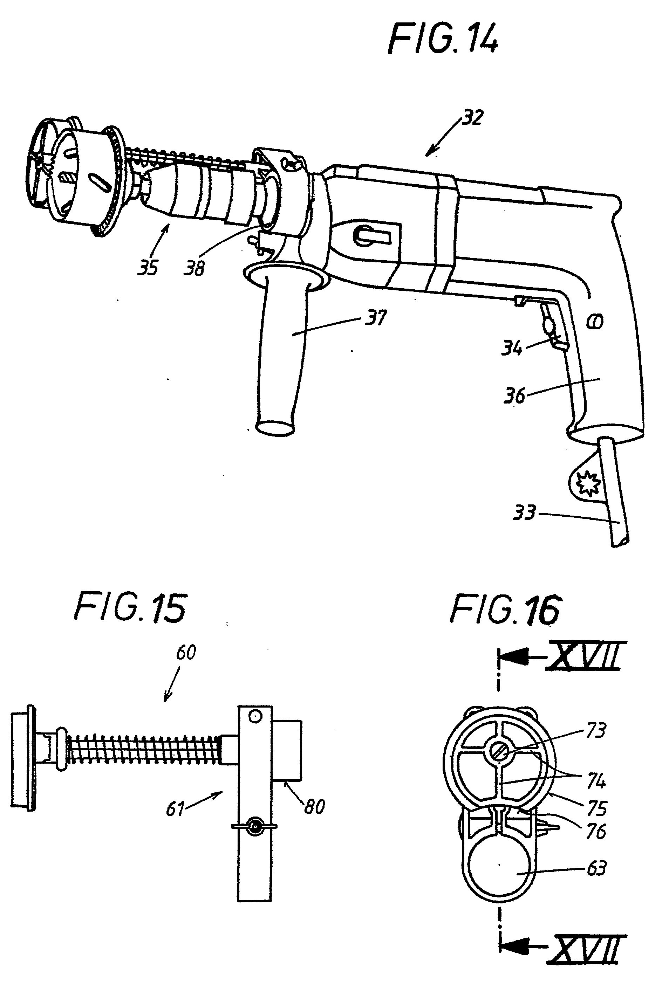

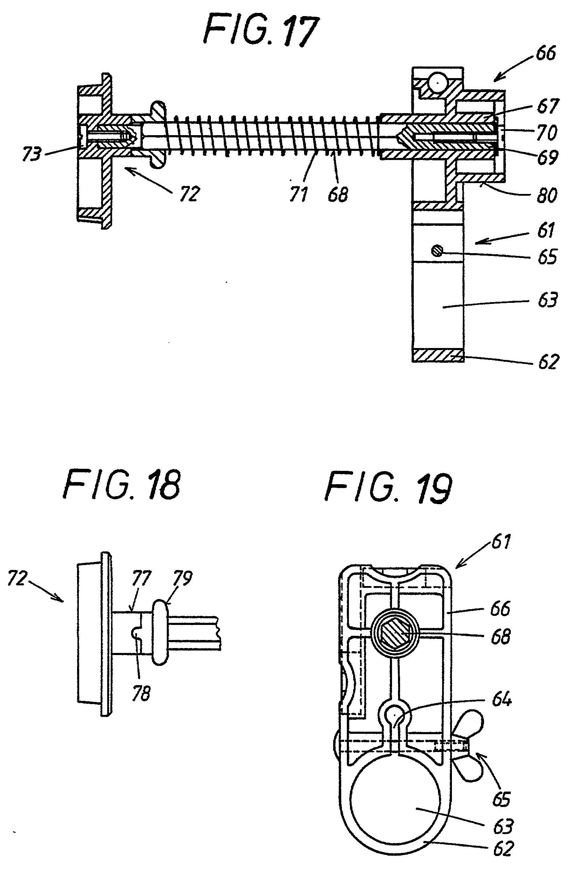

Wie die Fig. 17 und 19 der Zeichnungen am besten erkennen lassen, besteht die Kupplung des Haltekörpers 61 aus einem Klemmelement 62 mit einem Aufnahmeraum 63 und aus einem Befestigungselement 65. Dabei ist die Begrenzungswand des Aufnahmeraumes 63 von einem Schlitz 64 unterbrochen. Dieser Schlitz wird von einer nicht näher bezeichneten Schraube durchsetzt, auf deren aus dem Haltekörper 61 herausragenden Ende eine Spannmutter angebracht ist. Schraube und Spannmutter bilden dabei zusammen das Befestigungselement 65. Das in der Fig. 19 obere Ende des Haltekörper 61 hat einen generell mit 66 bezeichneten Verbindungsbereich. Zu diesem gehört zunächst eine im Zentrum des Verbindungsbereiches 66 liegende Aufnahmebuchse 67, in welche das rückwärtige Ende 69 einer Verbindungsstange 68 eingreift, die im Querschnitt unrund, beispielsweise mehreckig gehalten ist, wie sich aus der Fig. 19 der Zeichnung ergibt. In der Mitte des rückwärtigen Endes 69 der Verbindungsstange 68 ist eine nicht näher bezeichnete, nach vorn hin offene Gewindebohrung vorhanden, in welche der Gewindeschaft einer Halteschraube 70 eingreift und zwar unter Zwischenschaltung einer Scheibe. Der vordere Bereich des rückwärtigen Endes 69 der Verbindungsstange 68 wird - wie die Fig. 17 erkennen läßt - von einer Befestigungsfläche 80 konzentrisch umgeben. Diese Befestigungsfläche dient zum Anbringen eines Zusatzhandgriffes 37, der in der Fig. 14 der Zeichnung zu erkennen ist. Dieser Zusatzhandgriff 37 ist ein handelsüblicher, der in bekannter Weise mittels Klemmelementen auf der Befestigungsfläche 80 lösbar angebracht werden kann.

Der größte Teil der Verbindungsstange 68 wird von einer Rückstellfeder 71 umgriffen, deren eines Ende sich an der Stirnfläche der Aufnahmebuchse 67 abstützt, während das andere Ende an einem Aufsteckstück 79 anliegt, das auf dem einen Ende der Verbindungsstange 68 angebracht ist, so wie dies die Fig. 17 und 18 der Zeichnung erkennen lassen.

Auf dem vorderen freien Ende der Verbindungsstange 68 ist unter Benutzung einer Verbindungsschraube 73 ein generell mit 72 bezeichneter Führungs- und Zentrierkörper angeordnet. Dieser hat in Draufsicht gesehen (vergl. dazu die Fig. 16 der Zeichnung) im wesentlichen kreisförmige Gestalt, wobei jedoch an seiner einen Seite die Umfangsfläche 75 eine Ausnehmung 76 aufweist. Die Fig. 16 läßt ferner erkennen, daß die Verbindungsschraube 73 außerhalb des Mittelpunktes des etwa kreisförmige Gestalt aufweisenden Führungs- und Zentrierkörpers 72 angeordnet sit. Die Verbindungsschraube liegt dabei im Schnittpunkt sich kreuzender Verstärkungsrippen 74. In der Lage gemäß der Fig. 16 der Zeichnung hat die Befestigungsschraube 73 ihren weitesten Abstand von dem Mittelpunkt des Aufnahmeraumes 63 des Haltekörpers 61. Um den Abstand dieser beiden Teile voneinander verändern zu können, kann man den Führungs- und Zentrierkörper 72 auf dem vorderen Ende der Verbindungsstange 68 drehen, nachdem man vorher die Befestigungsschraube 73 gelöst hat. Um diese Drehung zu erreichen, ist die Nabe 77 des Führungs- und Zentrierkörpers 72 mit nicht näher bezeichneten Ausnehmungen versehen, in welche Mitnehmervorsprünge 78 des Aufsteckstückes 79 eingreifen. In der Fig. 18 der Zeichnung ist die Verbindungslage dargestellt. Nach Lösen der Verbindungsschraube 73 kann der Führungs- und Zentrierkörper 72 nach vorn bewegt und dann gedreht werden und zwar um 180°. Nach dem Zurückschieben und dem Wiederanziehen der Verbindungsschraube 73 können dann die Mitnehmervorsprünge wieder in die zugeordneten Ausnehmungen, jedoch ist nunmehr der Abstand zwischen der Befestigungsschraube 73 und dem Mittelpunkt des Aufnahmeraumes 73 verändert. Nachzutragen bleibt noch, daß der Haltekörper 61 einstückig aus einem der handelsüblichen Kunststoffe hergestellt ist.

Wie bereits erwähnt, sind die dargestellten Ausführungen nur beispielsweise Verwicklichungen der Erfindung und diese nicht darauf beschränkt Vielmehr sind noch mancherlei andere Ausführungen und Anwendungen möglich. Insbesondere kann die Gestalt und das Aussehen sowohl des Abstützrahmens als auch des Haltekörpers abweichend von den dargestellten Ausführungsbeispielen gewählt werden. Aus Fertigungsgründen empfiehlt es sich, jeden dieser Teile einstückig aus einem der auf dem Markt erhältlichen Kunststoffe zu fertigen und zwar einschließlich der zugeordneten Teile, wie Kupplungen und Aufnahmen für die Enden der Verbindungsstangen 54 bzw. der auf diesen angeordneten Rückstellfedern. Der vorspringende Teil 52 des Abstützrahmens 41 enthält zweckmäßig ihm angeformte Führungen od.dgl., mit denen eine ungewollte Drehbewegung des Führungs- und Zentrierkörpers 50 vermieden wird. In dem Ausführungsbeispiel nach der Fig. 1 der Zeichnung ist eine Antriebsvorrichtung 32 wiedergegeben, die außer ihrem Handgriff 36 noch einen weiteren Zusatzhandgriff 37 aufweist, der bei Bedarf an der Befestigungsaufnahme 38 der Antriebsvorrichtung 32 angebracht werden kann. Im übrigen hat die Antriebsvorrichtung 32 eine Handhabe 34, mit der der Motor ein- und ausgeschaltet werden kann, wobei dieser über das Kabel 33 in bekannter Weise mit Strom versorgt wird. Auf die Angabe von weiteren Einzelheiten der Antriebsvorrichtung 32 wird verzichtet, weil diese gegen andere, im Handel befindliche Ausführungsformen ausgetauscht werden kann. Wesentlich ist nur, daß die benutzte Antriebsvorrichtung einerseits ein Bohrfutter 35 zur Unterbringung des freien Endes 17 des Spiralbohrers 12 aufweist und eine Befestigungsaufnahme 38 hat, die mit der Kupplung 46 des Haltekörpers 43 der Hilfsvorrichtung 40 zusammenwirken kann. Im gewählten Ausführungsbeispiel ist eine einfache Steckverbindungen zwischen den genannten Teilen hergestellt. Diese Verbindungsart ist gewählt, weil sie die einfachste bei der Herstellung ist und weil sie ein Zusammenfügen und bei Bedarf ein Wiedertrennen der beiden Teile in einfacher Weise zuläßt. Grundsätzlich wäre es auch möglich, andere Kupplungen und Gegenkupplungen zu verwenden.

**Patentansprüche**

1. Gerät zum Herstellen von Wandausnehmungen für die nachträgliche Montage von Hohlwanddosen einer Elektroinstallation, mit einem im Querschnitt runden Grundkörper (11), an dem das eine Ende eines Sägeblattes (31) vorzugsweise lösbar angebracht ist, dessen vordere freie Stirnfläche die Verzahnung aufweist und bei dem in der Mitte des Grundkörpers (11) ein Bohrer (12) lösbar befestigt ist, der im zusammengebauten Zustand mit seiner Spitze über das Sägeblatt (31) vorsteht und dessen rückwärtiges Ende (17) mit einer Antriebsvorrichtung (32), wie einer Bohrmaschine, zusammenwirkt, **gekennzeichnet durch** eine mit der Antriebsvorrichtung (32) kuppelbare Hilfsvorrichtung (40) bestehend aus einem an die Wand (57) anlegbaren Abstützrahmen (41) mit einem Durchbruch (42) zum Durchgriff der Arbeitswerkzeuge (12 und 31) des Gerätes (10) und mit einem Haltekörper (43), wobei Abstützrahmen (41) und Haltekörper (43) über Verbindungselemente (44) und Kraftspeicher (45) derart miteinander verbunden sind, daß ihr gegenseitiger Abstand veränderbar ist und aus einem dem Abstützrahmen (41) zugeordnetem Führungs- und Zentrierkörper (50), der in eine bereits erzeugte Wandausnehmung (58) einführbar ist und dessen Mittelpunkt (M) von demjenigen des Arbeitswerkzeuges (12 bzw. 31) einen Abstand aufweist, der dem genormten Abstand der Mittelpunkte von Installationsgeräten einer Installationsgerätekombination entspricht.

2. Gerät nach Anspruch 1, dadurch gekennzeichnet, daß der Führungs- und Zentrierkörper (50) im bezug auf die Grundebene des Abstützrahmens (41) begrenzt verschiebbar ist.

3. Gerät nach Anspruch 1 und 2, dadurch gekennzeichnet, daß der Führungs- und Zentrierkörper (50) in der unwirksamen Lage der Hilfsvorrichtung (40) unter Einwirkung einer Feder (54) um das Maß seiner Verschiebebewegung vor der Grundebene des Abstützrahmens (41) liegt.

4. Gerät nach einem oder mehreren der vorangehenden Ansprüche, dadurch gekennzeichnet, daß der Abstützrahmen (41) einen seitlich vorstehenden Teil (52) aufweist, der einen Verbinder (53) mit der Rückstellfeder (54) aufnimmt, dessen vorderes Ende in dem Führungs- und Zentrierkörper (50) lagert.

5. Gerät nach Anspruch 3 und 4, dadurch gekennzeichnet, daß die Rückstellfeder (54) den Führungs- und Zentrierkörper (50) in Abstand von der Vorderfläche des Teiles (52) hält.

6. Gerät nach einem oder mehreren der vorangehenden Ansprüche, dadurch gekennzeichnet, daß ein und demselben Abstützrahmen (41) mehrere unterschiedlich bemessene und wahlweise benutzbare Führungs- und Zentrierkörper (50) zugeordnet sind.

7. Gerät nach Anspruch 1, dadurch gekennzeichnet, daß der Abstützrahmen (41) mit dem Haltekörper (43) über mehrere, vorzugsweise drei Verbindungsstangen (44) verbunden ist, von denen jede von einer Stellfeder (45) umgeben ist, wobei die Verbindungsstangen (44) und die Rückstellfeder (45) vorzugsweise untereinander gleich gestaltet sind.

8. Gerät nach Anspruch 1, dadurch gekennzeichnet, daß der Haltekörper (43) in seiner Mitte leigend die Kupplung (46) aufweist, die auf die genormte Befestigungsaufnahme (38) einer Antriebsvorrichtung (32) aufsteckbar ist.

9. Gerät nach Anspruch 8, dadurch gekennzeichnet, daß die Kupplung (46) hohlzylinderförmig gestaltet und einstückig mit dem Haltekörper (43) ausgebildet ist.

10. Gerät nach einem oder mehreren der vorangehenden Ansprüche, dadurch gekennzeichnet, daß der Haltekörper (43) in Draufsicht gesehen sternförmig gestaltet ist, wobei die Kupplung (46) im Mittelpunkt des Sterns liegt, während das Ende jedes Sternarmes über Haltemittel (48) jeweils das eine Ende eine Verbindungsstange (44) aufnimmt.

11. Gerät nach einem oder mehreren der vorangehenden Ansprüche, dadurch gekennzeichnet, daß der Abstützrahmen (41) auf seiner dem Haltekörper (43) zugekehrten Seite eine der Anzahl der Verbindungsstangen (44) angepaßte Anzahl von hohlzylinderartigen Verlängerungen (49) aufweist, in welche jeweils das eine Ende einer Verbindungsstange (44) eingreift und an dessen Boden sich jeweils das eine Ende der Rückstellfeder (45) abstützt.

12. Gerät nach einem oder mehreren der Ansprüche 1 bis 6, dadurch gekennzeichnet, daß der Führungs- und Zentrierkörper (52) eine sein Einführen in eine Ausnehmung (58) der Wand (57) erleichternde Einführungsschräge (52) aufweist.

13. Gerät zum Herstellen von Wandausnehmungen nach Anspruch 1, dadurch gekennzeichnet, daß der langgestreckte Haltekörper (61) an seinem einen Ende eine auf der geformten Befestigungsaufnahme (38) der Antriebsvorrichtung (32) befestigbare Kupplung (62, 63, 64, 65) und an seinem anderen Ende eine Aufnahmebuchse (67) für das rückwärtige Ende (69) einer Verbindungsstange (68) für den Führungs- und Zentrierkörper (72) aufweist.

14. Gerät nach Anspruch 1 und 13, dadurch gekennzeichnet, daß die Kupplung des Haltekörpers (61) aus einem Klemmelement (62) mit einem Aufnahmeraum (63) und aus einem Befestigungselement (65) besteht.

15. Gerät nach Anspruch 13 und 14, dadurch gekennzeichnet, daß die Begrenzungswand des Aufnahmeraumes (63) von einem Schlitz (64) unterbrochen ist und daß der Schlitz (64) von einer Schraube durchsetzt ist, auf deren aus dem Haltekörper (61) herausragenden Ende eine Spannmutter angebracht ist.

16. Gerät nach einem oder mehreren der vorangehenden Ansprüche, dadurch gekennzeichnet, daß in dem Verbindungsbereich (66) des Haltekörpers (61) eine Befestigungsfläche (80) zum lösbaren Anbringen eines Zusatzhandgriffes (37) angeordnet ist.

17. Gerät nach Anspruch 13, dadurch gekennzeichnet, daß der Führungs- und Zentrierkörper (72) eine Nabe (77) aufweist, die unter Zwischenschaltung einer Verrastung in unterschiedlichen Lagen mit einem Aufsteckstück (79) der Verbindungsstange (68) verbindbar ist.

18. Gerät nach Anspruch 13 und 17, dadurch gekennzeichnet, daß der Führungs- und Zentrierkörper (72) mittels einer Verbindungsschraube (73) mit der Verbindungsstange (68) verbunden ist und daß diese Verbindungsschraube (73) außerhalb des Mittelpunktes des etwa kreisförmige Gestalt aufweisenden Führungs- und Zentrierkörpers (72) angeordnet ist.

19. Gerät nach einem oder mehreren der vorangehenden Ansprüche, dadurch gekennzeichnet, daß der Haltekörper (61) einstückig ausgebildet ist.

**Claims**

1. A device for producing recesses in walls for subsequently fitting cavity wall boxes of an electrical installation, comprising a main body (11) which is of round cross-section and on which one end of a saw blade (31) is preferably releasably mounted, the front free end face of the saw blade having the teeth, and wherein releasably fixed in the middle of the main body (11) is a drill (12) which in the assembled condition projects with its tip beyond the saw blade (31) and the rearward end (17) of which co-operates with a drive apparatus (32) such as a drilling machine, characerized by an auxiliary device (40) which can be coupled to the drive apparatus (32) and comprising a support frame (41) which can be laid against the wall (57) with an opening (42) for the working tools (12 and 31) of the device (10) to pass therethrough and with a holding body (43), wherein the support frame (41) and the holding body (43) are connected together by way of connecting elements (44) and force storage means (45) in such a way that their mutual spacing is variable, and further comprising a guide and centering body (50) which is associated with the support frame (41) and which can be introduced into a wall recess (58) which has already been made, the cente point (M) of the guide and centering body (50) being at a spacing from that of the working tool (12 or 31), which corresponds to the standardised spacing of the centre points of installation units of an installation unit combination.

2. A device according to claim 1 characterized in that the guide and centering body (50) is limitedly displaceable with respect to the main plane of the support frame (41).

3. A device according to claim 1 and claim 2 characterized in that in the inoperative position of the auxiliary device (40) the guide and centering body (50) is disposed in front of the main plane of the support frame (41) by the distance of its displacement travel, under the effect of a spring (54).

4. A device according to one or more of the preceding claims characterized in that the support frame (41) has a laterally projecting portion (52) which receives a connector (53) with the return spring (54), the front end of the connector being mounted in the guide and centering body (50).

5. A device according to claim 3 and claim 4 characterized in that the return spring (54) holds the guide and centering body (50) at a spacing from the front surface of the portion (52).

6. A device according to one or more of the preceding claims characterized in that associated with one and the same support frame (41) is a plurality of guide and centering bodies (50) which are of different dimensions and which can be selectively used.

7. A device according to claim 1 characterized in that the support frame (41) is connected to the holding body (43) by way of a plurality of and preferably three connecting rods (44), each of which is surrounded by a return spring (45), the connecting rods (44) and the return springs (45) preferably being of the same configuration as each other.

8. A device according to claim 1 characterized in that the holding body (45) is provided at its centre with the coupling (46) which can be fitted on to the standardised fixing mounting (38) of a drive apparatus (32).

9. A device according to claim 8 characterized in that the coupling (46) is of a hollow-cylindrical configuration and is in one piece with the holding body (43).

10. A device according to one or more of the preceding claims characterized in that in plan view the holding body (43) is of a star-like configuration, the coupling (46) being disposed at the centre point of the star while the end of each arm of the star respectively accommodates one end of a connecting rod (44) by way of holding means (48).

11. A device according to one or more of the preceding claims characterized in that, on its side towards the holding body (43), the support frame (41) has a number, which matches the number of connecting rods (44), of extension portions (49) of a hollowcylindrical configuration, into each of which engages the one end of a respective connecting rod (44) while the one end of a respective one of the return springs (45) bears against the bottom thereof.

12. A device according to one or more of claims 1 to 6 characterized in that the guide and centering body (52) has an inclined insertion surface (51) for facilitating the insertion thereof into a recess (58) in the wall (57).

13. A device for producing recesses in walls according to claim 1 characterized in that at its one end the elongate holding body (61) has a coupling (62, 63, 64, 65) which can be fixed on the shaped fixing mounting (38) of the drive apparatus (32) while at its other end it has a receiving sleeve (67) for receiving the rearward end (69) of a connecting rod (68) for the guide and centering body (72).

14. A device according to claim 1 and claim 13 characterized in that the coupling of the holding body (61) comprises a clamping element (62) with a receiving space (63) and a fixing element (65).

15. A device according to claim 13 and claim 14 characterized in that the wall defining the receiving space (63) is interrupted by a slot (64) and that a screw passes through the slot (64), a clamping nut being carried on the end of the screw which projects out of the holding body (61).

16. A device according to one or more of the preceding claims characterized in that a fixing surface (80) for releasably mounting an additional handle (37) is diposed in the connecting region (66) of the holding body (61).

17. A device according to claim 13 characterized in that the guide and centering body (72) has a hub (77) which can be connected to a fitting portion (79) on the connecting rod (68) with the interposition of a locating means in different positions.

18. A device according to claim 13 and claim 17 characterized in that the guide and centering body (72) is connected to the connecting rod (68) by means of a connecting screw (73) and that said connecting screw (73) is arranged outside the centre point of the guide and centering body (72) which is of approximately circular configuration.

19. A device according to one or more of the preceding claims characterized in that the holding body (61) is of a one-piece construction.

## Revendications

1. Dispositif pour creuser des cavités ou evidements dans les murs pour le montage ultérieur de boîtiers creux pour une installation électrique comprenant un corps de base (11) de section circulaire auquel est adaptée de préférence de manière amovible une extrémité d'une lame de scie 31, dont la face frontale libre porte la denture, et dans lequel au centre du corps de base (11) est fixé de manière amovible un foret (12), qui en position assemblée fait saillie par sa pointe par rapport à la lame de scie (31), et dont l'extrémité arrière (17) coopère avec un dispositif d'entraînement (32) tel qu'une perceuse; caractérisé par un dispositif auxiliaire (40) couplable avec le dispositif d'entraînement (32), consistant en un cadre d'appui 41 que l'on peut appliquer sur le mur (57) et qui comporte une ouverture (42) pour le passge de l'outil de travail ou d'usinage (12 et 31) du dispositif (10), et un corps de retenue (43), le cadre d'appui (41) et le corps de retenue (43) étant reliés l'un à l'autre par des éléments de jonction (44) et des accumulateurs d'énergie (45), de manière que leur distance relative puisse être modifiée, et par un corps de guidage et de centrage (50) fixé au cadre d'appui (41), qui peut être introduit dans un évidement déjà réalisé du mur (58) et dont le point central (M) présente par rapport à celui de l'outil de travail (12 et 31) une distance qui correspond à la distance normalisée des centres des appareils à installer une combinaison d'appareils à installer.

2. Dispositif selon la revendication 1 caractérisé en ce que le corps de guidage et de centrage (50) est susceptible d'être déplacé de manière limitée par rapport au plan de base du cadre d'appui (41).

3. Dispositif selon la revendication 1 et 2 caractérisé en ce que le corps de guidage et de centrage (50), en position inactive du dispositif auxiliaire (40), est soumis à l'action d'un ressort (54) qui le repousse en avant du plan de base du cadre d'appui (41) selon un déplacement de coulissement.

4. Dispositif selon une ou plusieurs des revendications prédédentes caractérisé en ce que le cadre d'appui (41) présente une partie saillante latérale (52) qui comporte un organe de liaison (53) avec le ressort de rappel (54) dont l'extrémité avant est logée dans le corps de guidage et de centrage (50).

5. Dispositif selon la revendication 3 et 4 caractérisé en ce que le ressort de rappel (54) maintient le corps de guidage et de centrage (50) à distance de la face antérieure de la partie (52).

6. Dispositif selon une ou plusieurs des revendications précédentes caractérisé en ce qu'un seul et même cadre d'appui (41) est susceptible de recevoir plusieurs corps de guidage et de centrage (50) de dimensions différentes et utilisables au choix.

7. Dispositif selon la revendication 1 caractérisé en ce que le cadre d'appui (41) est relié au corps de retenue (43) par l'intermédiaire de plusieurs tiges de jonction (44) de préférence trois, chacune desquelles étant entourée par un ressort de rappel (45), les tiges de jonction (44) et les ressorts de rappel (45) ayant de préférence la même conformation.

8. Dispositif selon la revendication 1 caractérisé en ce que le corps de retenue (43) comporte en son milieu l'accouplement (46) qui est enfichable sur le récepteur de fixation normalisée (38) d'un dispositif d'entraînement (32).

9. Dispositif selon la revendication 8 caractérisé en ce que l'accouplement (46) présente la forme d'un cylindre creux et est réalisé monobloc avec le corps de maintien (43).

10. Dispositif selon une ou plusieurs des revendications précédentes caractérisé en ce que le corps de retenue (43) présente en élévation la forme d'une étoile, l'accouplement (46) étant disposé au centre de l'étoile, tandis que l'extrémité de chacune des branches de l'étoile reçoit par l'intermédiaire de moyens de retenue (48) une extrémité d'une tige de jonction (44).

11. Dispositif selon une ou plusieurs des revendications précédentes caractérisé en ce que le cadre d'appui (41) présente sur sa face opposée au corps de retenue (43) l'une parmi un certain nombre de tiges de jonction (44) correspond à un nombre de prolongements cylindriques creux (49), dans chacun desquels est engagée une extrémité d'une tige de jonction (44) et sur le fond desquels prend appui une extrémité du ressort de rappel (45).

12. Dispositif selon une ou plusieurs des revendications 1 à 6 caractérisé en ce que le corps de guidage et de centrage (52) comporte une rampe inclinée d'introduction (51) facilitant son introduction dans un évidement (58) du mur (57).

13. Disposition pour creuser des cavités dans les murs selon la revendication 1 caractérisé en ce que le corps de retenue (61) de forme allongée comporte à une de ses extrémités un accouplement (62, 63, 64, 65) susceptible d'être fixé à un récepteur de fixation (38) du dispositif d'entraînement (32) et à son autre extrémité un manchon de réception (67) pour l'extrémité arrière (69) d'une tige de jonction (68) pour le corps de guidage et de centrage (72).

14. Dispositif selon la revendication 1 et 13 caractérisé en ce que l'accouplement du corps de retenue (61) consiste en un élément de serrage (62) comportant une cavité de réception (63) et en un élément de fixation (65).

15. Dispositif selon les revendications 13 et 14 caractérisé en ce que la paroi délimitant la cavité de réception (63) est interrompue par une fente (64) et en ce que la fente (64) est traversée par une vis sur l'extrémité de laquelle en saillie hors du corps de retenue (61) est rapporté un écrou de serrage.

16. Dispositif selon une ou plusieurs des revendications précédentes, caractérisé en ce que dans la zone de jonction (66) du corps de retenue (61) est disposée une surface de fixation (80) pour l'adjonction amovible d'une poignée additionnelle (37).

17. Dispositif selon la revendication 13 caractérisé en ce que le corps de guidage et de centrage (72) comporte un moyeu (77) qui par l'intermédiaire d'un verrouillage, est susceptible d'être relié dans différentes positions, à une pièce enfichable (79) de la tige de jonction (68).

18. Dispositif selon les revendications 13 et 17 caractérisé en ce que le corps de guidage et de centrage (72) est relié par l'intermédiaire d'une vis de jonction (73) à la tige de jonction (68), et en ce que cette vis de jonction (73) est disposée en dehors du centre du corps de guidage et de centrage (72) présentant une section sensiblement circulaire.

7z19. Dispositif selon une ou plusieurs des revendications précédentes caractérisé en ce que le corps de retenue (61) est réalisé monobloc.

FIG.1

FIG.2

FIG.3

FIG. 4

FIG. 5

# FIG.6

# FIG. 7

# FIG. 8

# FIG. 9

FIG. 10

FIG. 11

FIG. 12

FIG. 13

*FIG.14*

*FIG.15*

*FIG.16*

## FIG. 17

## FIG. 18

## FIG. 19